# EUROPÄISCHE PATENTSCHRIFT

(11) **EP 2 388 156 B1**
(45) Veröffentlichungstag und Bekanntmachung des Hinweises auf die Patenterteilung: **09.05.2012**
(21) Anmeldenummer: 10450087.1
(22) Anmeldetag: 19.05.2010
(51) Int. Cl.: B60C 27/10

(54) **Spannschloss**
Tightener
Tendeur

(43) Veröffentlichungstag der Anmeldung: 23.11.2011
(73) Patentinhaber: Pewag Schneeketten GmbH & Co KG, 9371 Brückl (AT)
(72) Erfinder: Ägyd Pengg, 9020 Klagenfurt (AT); Bernhard Niess, 8312 Ottendorf (AT)
(74) Vertreter: Matschnig, Franz

(56) Entgegenhaltungen:
- EP-A1- 2 151 336
- WO-A1-01/76895

## Beschreibung

Die Erfindung betrifft eine Spannvorrichtung für eine auf ein Rad eines Fahrzeuges montierbare Gleitschutzkette mit einem Gehäuse und einem durch eine Gehäuseöffnung in das Gehäuse hineinziehbaren Spannstrang, wobei der Spannstrang innerhalb des Gehäuses an eine in Aufwickelrichtung vorgespannte, um ihre Achse drehbar gelagerte Wickelrolle angeschlossen ist, wobei an der Wickelrolle ein Klinkenkrad mit zumindest einer ihm zugeordneten Sperrklinke vorgesehen ist und der Spannstrang durch Eingreifen der Sperrklinke in das Klinkenrad entgegen seiner Spannrichtung blockierbar ist; dabei kann die Sperrklinke eine Freigabestellung, in welcher sie nicht in Eingriff mit dem Klinkenrad steht und der Spannstrang nicht blockiert ist, einnehmen und ist aus dieser Freigabestellung bei Rotation des Rades unter Einwirkung der Fliehkraft zumindest abschnittsweise nach außen bewegbar, sodass ein Eingreifen der Sperrklinke in das Klinkenrad bewirkt wird.

Spannvorrichtungen werden bei Gleitschutzketten verwendet, um nach der Montage einen unerwünschten Rücklauf des Spannstranges entgegen der Spannrichtung zu vermeiden. Eine mögliche Anordnung des Spannschlosses an der Gleitschutzkette bzw. des Spannstranges ist beispielsweise aus AT 412 202 B bekannt geworden.

Eine Spannvorrichtung der eingangs genannten Art und mit den Merkmalen Oberbegriffs von Anspruch 1 ist in EP 2 151 336 A1 offenbart. Darin stellt die Sperrklinke ein Fliehkraftpendel dar, welches unter Einfluss der Fliehkraft ab einer gewissen Umdrehungszahl des Fahrzeugrades mit dem Klinkenrad in Eingriff gebracht wird und bei Stillstand des Rades bzw. bei einer Verringerung der Umdrehungszahl des Rades in seine ursprüngliche Position zurückkehrt. Somit erfolgt ab einer gewissen Drehzahl des Rades bzw. Geschwindigkeit des Fahrzeuges ein Eingreifen der Sperrklinke in das Klinkenrad und dadurch eine Fixierung des Spannstranges entgegen seiner Aufwickelrichtung. Dies ermöglicht einerseits ein Blockieren des Spannstranges unabhängig von einer manuellen Betätigung durch die Person, die die Kette bei Montage bzw. Demontage handhabt; andererseits lässt sich ein ungewolltes Abwickeln des Spannstranges von der Wickelrolle verhindern und ein sicherer Halt der Gleitschutzkette an dem Reifen erreichen, ohne dass es - bei ruhendem Rad - zu einer Beeinträchtigung oder Behinderung bei der Handhabung der Kette kommt.

Das Rückstellen der Sperrklinke in die Freigabestellung erfolgt bei der Spannvorrichtung der EP 2151 336 A1 entweder passiv oder durch eine Feder. Ersteres bedeutet, dass ein Rückstellen nur dann erfolgt, wenn die Spannvorrichtung eine geeignete Orientierung einnimmt; somit ist kein zuverlässiges Rückstellen gegeben. Ein Rückstellen mit einer Feder bietet ein zuverlässiges Rückstellen in allen Lagen der Spannvorrichtung, jedoch verringert die Federkraft die Presskraft der Sperrklinke auf das Klinkenrad.

Eine Aufgabe der Erfindung liegt darin, ein Spannschlosses der eingangs genannten Art zu schaffen, welches einerseits zum Lösen nicht manuell betätigt werden muss und andererseits das Rückstellen der Sperrklinke verbessert ist. Zusätzlich sollte es einen dem rauen Betrieb entsprechenden robusten und einfachen Aufbau besitzen.

Diese Aufgabe wird ausgehend von einem Spannschloss der eingangs genannten Art erfindungsgemäß mithilfe eines magnetisch wirkenden Halteelements gelöst, welches mit der Sperrklinke über magnetische Wechselwirkung zusammenwirken kann und zumindest in der Freigabestellung der Sperrklinke eine Rückstellkraft erzeugt, welche einer Auslenkung der Sperrklinke aus der Freigabestellung entgegenwirkt.

Diese Lösung ergibt ein einfaches und zuverlässiges Rückstellen der Sperrklinke durch eine "magnetische Feder" bei Stillstand oder langsamer Rotation des Rades. Gemäß der Natur der magnetischen Wechselwirkung nimmt die Kraft, die das magnetische Halteelement auf die Sperrklinke ausübt, mit wachsendem Abstand nicht zu - eher nimmt sie ab. Dadurch ergibt sich eine erleichterte Dimensionierung der Komponenten des Spannschlosses. Zudem ergibt sich gegenüber herkömmlichen Ausführungen mit einer Spiralfeder (oder anderen elastischen Feder) in der Blockierstellung eine bessere Feststellwirkung der Sperrklinke auf das Klinkenrad, insbesondere wenn die Anordnung so gewählt ist, dass in der Blockierstellung die Rückstellkraft auf Null oder einen sehr geringen Wert abfällt.

In einer vorteilhaften Weiterbildung der Erfindung ist das Halteelement in Form eines in dem Gehäuse angebrachten Permanentmagneten realisiert, und die Sperrklinke bzw. zumindest ein Teil derselben weist magnetisierbares Material auf, welches sich bei der Auslenkung der Sperrklinke aus der Freigabestellung von dem Halteelement entfernt. Hierbei ist es besonders günstig, wenn die Sperrklinke aus einem magnetisierbaren Material, insbesondere einem weich- oder hartmagnetischen Material, besteht.

In einer Ausführungsform der Erfindung, beispielsweise in Kombination mit einer Verzahnung an einer inneren Umfangsfläche des Klinkenrads, kann die Sperrklinke entlang einer in dem Gehäuse gehaltenen Führung beweglich gelagert sein. Hierbei kann die Führung eine Bewegung der Sperrklinke gemäß einer gekrümmten Bahn zulassen, an deren einem Ende die Sperrklinke mit an ihr vorgesehenen Vorsprüngen in das Klinkenrad eingreift.

Eine andere Ausbildung der Erfindung, die sich durch einen einfachen und somit kostengünstig herzustellenden Aufbau auszeichnet, sieht vor, dass die Sperrklinke exzentrisch um eine Achse drehbar gelagert ist. Hierbei kann ein nicht mit dem Klinkenrad zusammenwirkender freier Endabschnitt länger und massereicher sein als ein zweiter mit dem Klinkenrad zusammenwirkender Endabschnitt der Sperrklinke ausgebildet ist.

Zudem kann das Klinkenrad günstiger Weise an einer äußeren Umfangsfläche eine Verzahnung aufweisen, wodurch sich eine weitere Vereinfachung des Aufbaus erzielen lässt.

Eine sehr kompakte Bauweise lässt sich dadurch erzielen, dass das Klinkenrad an einer inneren Umfangsfläche eine Verzahnung aufweist, mit welcher die Sperrklinke durch eine von der Fliehkraft bewirkte Verschiebung und/oder Verdrehung in Eingriff bringbar ist; in dieser Ausbildung ist die Sperrklinke - zur Gänze oder zumindest hinsichtlich eines mit dem Klinkenrad zusammenwirkender Teils - von dem Klinkenrad umgeben.

In einer andere Weiterbildung der Erfindung kann eine einfachen und kompakte Ausführung erzielt werden, dass die Sperrklinke in radialer Richtung verschiebbar an einem Führungszapfen des Gehäuses gelagert ist, wobei die Sperrklinke eine Aufnahme für den Führungszapfen aufweist, wobei der an die Aufnahme anschließende, den mit dem Klinkenrad in Eingriff bringbaren Fortsatz aufweisende Endbereich der Sperrklinke den größten Teil der Masse der Sperrklinke aufweist. Hierbei kann eine magnetische Feder mithilfe eines Halteelements vorgesehen sein, das zwischen dem Führungszapfen und einem den mit dem Klinkenrad in Eingriff bringbaren Fortsatz aufweisenden Endbereich gegenüberliegenden Endbereich der Ausnehmung angeordnet ist. Dies kann z.B. mithilfe eines permanentmagnetischen Elements realisiert sein. Des weiteren kann die Sperrklinke, um eine sehr gute Führung und Definition des Bewegungsablaufes der Sperrklinke und dadurch eine sehr gute Funktionalität zu gewährleisten, im Bereich ihres mit dem Klinkenrad zusammenwirkenden Endbereiches um eine Achse drehbar gelagert sein. Die Sperrklinke kann hierbei eine Ausnehmung zur Aufnahme des oben erwähnten Führungszapfens des Gehäuses aufweisen. Ein an die Ausnehmung anschließender, freier, dem mit dem Klinkenrad zusammenwirkenden Endbereich gegenüberliegender Endabschnitt der Sperrklinke kann hierbei den größten Teil der Masse der Sperrklinke aufweisen.

Ein flacher Aufbau des Spannschlosses wird dadurch erreicht, dass die Sperrklinke plattenförmig ausgebildet ist und zumindest einen mit dem Klinkenrad in Eingriff bringbaren Fortsatz aufweist.

Ein vereinfachter Zusammenbau und eine kompakte Bauweise des Spannschlosses lassen sich dadurch erzielen dass die Wickelrolle und das Klinkenrad einstückig miteinander ausgebildet sind. Wickelrolle und Klinkenrad können jedoch auch gesonderte Komponenten sein, die bei der Fertigung des Spannschlosses verbunden werden.

Die Erfindung samt weiteren Vorteilen wird im Folgenden anhand einiger nicht einschränkender Ausführungsbeispiele näher erläutert, welche in den Zeichnungen dargestellt sind, in diesen zeigen schematisch:
- Fig. 1: eine Gleitschutzkette mit einem Spannschloss für deren einen Seitenstrang, montiert auf einem Fahrzeugreifen, in Seitenansicht;
- Fig. 2: ein Spannschloss gemäß einer ersten Ausführungsform der Erfindung, mit abgenommenem Gehäusedeckel, wobei sich die Sperrklinke in einer Blockie- rungsposition befindet;
- Fig. 3: das Spannschloss der Fig. 2, wobei sich die Sperrklinke in einer Freigabeposition befindet;
- Fig. 4: eine Seitenansicht eines Spannschloss gemäß einer weiteren Ausführungsform der Erfindung;
- Fig. 5: das Spannschloss der Fig. 6 in einer Explosionsdarstellung;
- Fig. 6: eine Schnittansicht des Spannschlosses der Fig. 6, wobei sich die Sperrklinke in einer Blockierungsposition befindet; und
- Fig. 7: eine Schnittansicht des Spannschlosses der Fig. 6, wobei sich die Sperrklinke in einer Freigabeposition befindet.

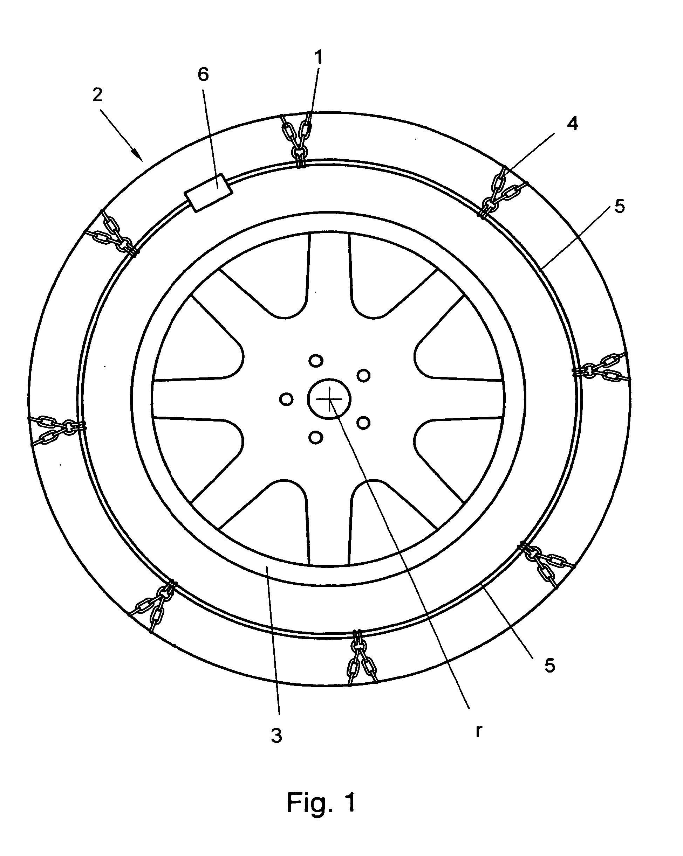

In Fig. 1 ist eine Gleitschutzkette 1 in Seitenansicht gezeigt, die auf einem Reifen 2 eines Fahrzeugrades 3 mit der Radachse r aufgezogen ist. Das Kettennetz 4 der Gleitschutzkette 1 ist an der Innen- und der Außenseite des Reifens bzw. Rades in bekannter Weise durch Seitenstränge 5 zusammen gehalten bzw. gespannt. Ein Spannschloss 6 hält während einer Drehbewegung des Rades den Spannstrang entgegen der Spannrichtung blockiert.

Hierzu sei angemerkt, dass die Seitenstränge 5 an der Innenseite des Reifens elastisch ausgebildet sein und durch ein Spannschloss 6 nach der Erfindung zusammengehalten werden können, wobei an der Außenseite eine andere Konstruktion verwendet werden kann. Andererseits kann die gesamte Spanneinrichtung einschließlich des Spannschlosses innen und außen auch gleich ausgebildet sein. Jedenfalls ist die Erfindung in ihrer Anwendung nicht auf eine der beiden Reifenseiten beschränkt.

Der Seitenstrang 5 kann eine Zugfeder - beispielsweise eine Spiralfeder - aufweisen. Im Inneren der Spiralfeder kann ein Spannstrang, im Folgenden mit dem Bezugszeichen 7 bezeichnet, verlaufen. Die Zugspannung der Zugfeder, die den Mantel darstellt, ist so groß, dass die Gleitschutzkette 1, beispielsweise eine Schneekette, nach dem Anlegen der Kette gespannt ist.

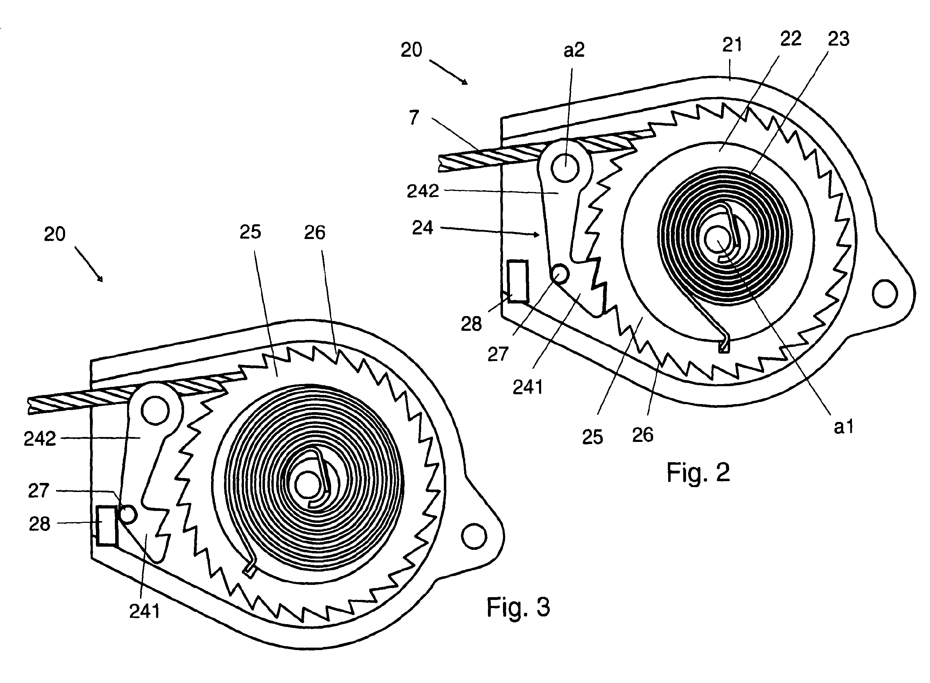

Die Figuren 2 bis 7 zeigen erfindungsgemäße Ausführungsformen 20, 60 des Spannschlosses 6. Selbstverständlich ist die Erfindung nicht auf die gezeigten Ausführungsformen beschränkt, vielmehr sind Kombinationen der Ausführungsformen sowie Abwandlungen dieser möglich, soweit diese in den Bereich der Ansprüche fallen.

Gemäß Fig. 2 weist das Spannschloss 20 einer ersten Ausführungsform ein Gehäuse 21 auf. Der Spannstrang 7 kann durch eine Gehäuseöffnung in das Gehäuse 21 hinein bzw. aus dem Gehäuse 21 heraus gezogen werden. Innerhalb des Gehäuses 21 ist der Spannstrang 7 an eine in Aufwickelrichtung vorgespannte, um ihre Achse a1 drehbar gelagerte Wickelrolle 22 angeschlossen, auf welche der Spannstrang 7 aufgewickelt werden kann. Die Wickelrolle 22 kann beispielsweise mit einer Spiralfeder 23 in Aufwickelrichtung vorgespannt sein, deren Enden an der Wickelrolle 22 und dem Gehäuse 21 des Spannschlosses 20 fixiert sind. Das andere Ende des Spannstranges 7 kann außen an dem Gehäuse 21 des Spannschlosses 20 befestigt sein.

An der Wickelrolle 22 ist ein Klinkenkrad 25 mit zumindest einer ihm zugeordneten Sperrklinke 24 vorgesehen. Das Klinkenrad 25 weist an einer äußeren Umfangsfläche eine Verzahnung 26 auf. Die Sperrklinke ist exzentrisch um eine Achse a2 gelagert sein und um diese als Achszapfen ausgebildete Achse a2 schwenkbar. Wie aus den Darstellungen der Fig. 2 und 3 ersichtlich, kann die Lagerung der Sperrklinke mit ihrem Endbereich 242, der dem mit dem Klinkenrad 25 zusammenwirkenden Ende 241 gegenüberliegt, erfolgen.

In Fig. 2 ist die Sperrklinke bis zu dem Klinkenrad 25 bewegt, und durch das sich so ergebende Eingreifen der Sperrklinke 24 in das Klinkenrad 25 ist der Spannstrang 7 entgegen seiner Spannrichtung blockierbar.

Fig. 3 zeigt die Sperrklinke 24 bei Stillstand des Rades 3. Hierbei befindet sich die Sperrklinke 24 in einer Ruhestellung (Freigabestellung), in welcher sie nicht in Eingriff mit dem Klinkenrad 25 steht, der Spannstrang 7 nicht blockiert ist und unter Einwirkung einer Kraft entgegen seiner Aufwickelrichtung aus dem Gehäuse gezogen und die Gleitschutzkette 1 auf den Reifen 2 montiert bzw. demontiert werden kann. Das Spannschloss 20 dient dazu, den Spannstrang 7 auch beim Einwirken erheblicher Kräfte im Betrieb zu Fixieren und somit einen guten Halt der Gleitschutzkette 1 zu gewährleisten.

Für alle gezeigten Ausführungsformen der Erfindung gilt, dass die Sperrklinke und die Verzahnung des Klinkenrades kongruent zueinander ausgebildet sein können. Günstiger Weise können die Wickelrolle 22 und das Klinkenrad 25 bei allen Ausgestaltungen der Erfindung einstückig miteinander ausgebildet sein.

Ebenso gilt für alle dargestellten Ausführungsformen der Erfindung, dass unter Einwirkung der durch eine Rotation des Rades 3 hervorgerufenen Fliehkraft die Sperrklinke 24 aus einer bei Stillstand des Rades 3 vorliegenden Ruhestellung, in welcher sie nicht in Eingriff mit dem Klinkenrad 25 steht und der Spannstrang 7 nicht blockiert ist, zumindest abschnittsweise nach außen bewegt wird. Durch diese von der Fliehkraft hervorgerufene Bewegung wird ein Eingreifen der Sperrklinke 24 in das Klinkenrad 25 bewirkt. Das Rückstellen der Sperrklinke aus der Blockierstellung in die Ruhestellung erfolgt mithilfe eines magnetischen Halteelements, das in dem Gehäuse oder auf dem Klinkenrad selbst - beispielsweise anstelle des Gegenstücks 27 - befinden kann.

Ein in dem Gehäuse befestigter Permanentmagnet 28 ist der Sperrklinke 24 zugeordnet und wirkt auf ein Gegenstück 27, welches aus einem magnetischen Material besteht, während die übrige Sperrklinke aus einem unmagnetischen Material besteht. Der als Halteelement dienende Permanentmagnet 28 übt somit eine magnetische Kraft auf das Gegenstück 27 aus. Das Halteelement 28 kann beispielsweise in Form eines Permanentmagneten aus Neodym-Eisen-Bor ("NdFeB", genauer eine auf der Grundverbindung Nd₂Fe₁₄B beruhende Legierung) ausgebildet sein. NdFeB-Magnete, die zum Korrosionsschutz vernickelt sind, sind wohlbekannt und auf dem Markt erhältlich; sie zeichnen sich durch eine hohe magnetische Felddichte und hohe Koerzitivfeldstärken aus. Das Gegenstück 27 in der Sperrklinke besteht typischer Weise aus rostfreiem Stahl. Im Allgemeinen kann das Gegenstück aus Eisen, magnetisierbarem Stahl, oder einem anderen leicht magnetisierbaren, weich- oder hartmagnetischem Material bestehen. Die Wahl der Materialien erfolgt im Hinblick darauf, dass die sich ergebende Anziehungskraft zwischen Magnet und Gegenstück durch die Fliehkraft, die sich bei einer nicht zu hohen Rollgeschwindigkeit des Rads ergibt (z.B. entsprechend 10 km/h Fahrzeuggeschwindigkeit) überwunden werden kann. Die übrigen Komponenten des Spannschlosses bestehen zweckmäßiger Weise aus nicht-magnetischen Materialien wie hochfesten Kunststoffen, Aluminium oder unmagnetischem Stahl.

In einer Variante kann auch die gesamte Sperrklinke 24 oder deren mit dem Klinkenrad zusammenwirkendes Ende 241 aus magnetischem Material bestehen, sodass die Sperrklinke selbst die Funktion des Gegenstücks innehat. In einer anderen Variante können die Positionen von Magnet und Gegenstück auch gegeneinander vertauscht sein, sodass der Magnet auf der Sperrklinke angeordnet ist und mit einer Komponente oder einem Teil des Gehäuses, das als Gegenstück dient, zusammenwirkt.

Wenn die Rotationsbewegung des Rades nachlässt, lässt auch die Wirkung der Fliehkraft entsprechend nach. Dann gewinnt wieder die magnetische Anziehung zwischen Halteelement und Gegenstück die Oberhand und die Sperrklinke fällt in die Freigabestellung (Fig. 3) zurück.

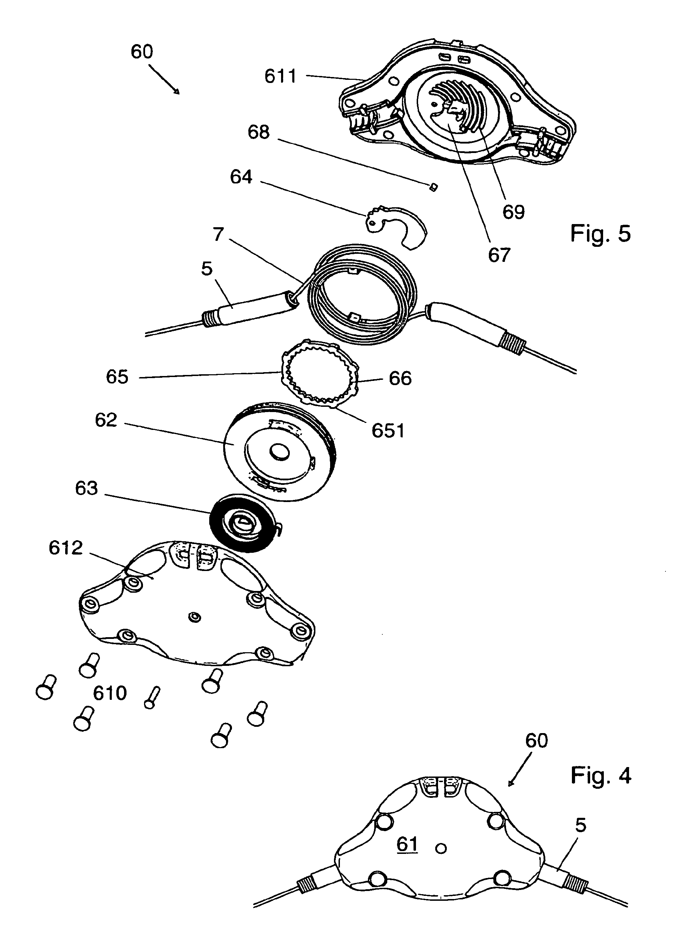

In den Fig. 4 bis 7 ist eine weitere Ausführungsform der Erfindung dargestellt, in der das Spannschloss 60 eine Sperrklinke 64 aufweist, deren Bewegung von einer Führung anstelle einer Achslagerung bestimmt ist.

In dieser Ausführungsform besteht das Gehäuse 61 (Fig. 4) aus zwei Teilen, nämlich Gehäusegrundteil 611 und Gehäusedeckel 612, die z.B. durch Niete 610 verbunden werden (Fig. 5). Das Spannschloss 60 liegt im montierten Zustand der Kette 1 vorzugsweise mit dem Rücken des Grundteils 611 dem Reifen an. Wie aus Fig. 5 ersichtlich sind beide Enden des Spannstranges 7 auf der Wickelrolle 62 aufgewickelt. Das Aufwickeln beider Strangenden ergibt den Vorteil einer symmetrischen Verkürzung des Spannstranges. Die Wickelrolle 62 ist wie bei den anderen Ausführungsformen mithilfe einer Spiralfeder 63 vorgespannt. Das Klinkenrad 65 ist in dieser Ausführungsform ein von der Wickelrolle 62 gesondertes Bauteil, das über Noppen 651 an der Außenseite des Klinkenrads mit der Wickelrolle 62 in Kontakt steht und mit einer Innenverzahnung 66 ausgestattet ist. Die asymmetrische Gestaltung der Noppen 651 hat fertigungstechnische Vorteile und erbringt zudem einen verbesserten Zusammenhalt zwischen Klinkenrad und Wickelrolle.

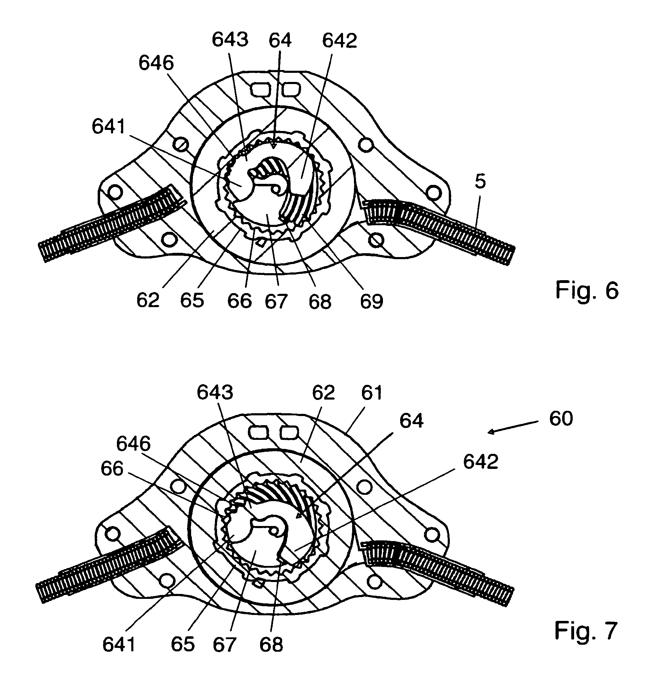

Die Sperrklinke 64 ist in dieser Ausbildung nicht in einem Achszapfen gelagert; vielmehr wird die Bewegung der Sperrklinke durch eine Führung definiert. Hierzu ist in dem Gehäuse ein Führungsstück 67 vorgesehen, das gegenüber dem Gehäuse unbeweglich ist, vorzugsweise mit dem Gehäusegrundteil 611 einstückig und im Inneren desselben auf dem Gehäuseboden angeordnet ist. Die Sperrklinke 64 weist eine Form auf, die eine das Führungsstück umgebende Ausnehmung bildet, wobei die Sperrklinke an den Flanken des Führungsstücks entlang gleiten und sich quer zu dieser Bewegung an dem Führungsstück 67 abstützen kann. Wie in Fig. 6 und 7 erkennbar weist die Sperrklinke 64 insbesondere zwei gegenüber liegende Endbereiche 641, 642 auf, zwischen denen das Führungsstück gelegen ist, und die durch einen um das Führungsstück herumgeführten Mittelbereich 643 zusammenhängen. Die beiden Endbereiche 641, 642 liegen mit jeweils einer Flanke dem Führungsstück 67 an. Die Flanken können wie gezeigt gebogen sein, typischerweise in Form konzentrischer Rotationsflächen, z.B. Zylindermantelbereiche, sodass sie eine gekrümmte Bahn der Sperrklinke 64 definieren.

Die beiden Endbereiche 641, 642 der Sperrklinke 64 sind wiederum verschieden groß ausgebildet, und der äußere Endbereich 642 weist den überwiegenden (d.h. größten) Teil der Masse der Sperrklinke auf. Insgesamt ist die Sperrklinke 64 so geformt, dass sie gegenüber dem Führungsstück 67 weiter außen liegt. (Hierbei ist der Begriff "außen" in Bezug auf die Achse r eines Rades zu verstehen, auf dem die Kette 1 samt Spannschloss montiert ist.) Bei einer Drehbewegung des Rades wird daher die Sperrklinke 64 unter Einfluss der Fliehkraft nach außen, d.h. in Fig. 6 nach oben, bewegt. Hierbei kommt die Sperrklinke 64 über an dem Mittelbereich 643 ausgebildeten Fortsätzen 646 mit der Verzahnung 66 in Eingriff und bewirkt so ein Blockieren des Klinkenrads 65 und der damit zusammenwirkenden Wickelrolle 63. Infolge der bereits erwähnten krummlinigen Führung wird hierbei der mit den Fortsätzen 646 der Sperrklinke 64 zusammenwirkende Teil der Verzahnung 66 deutlich weniger auf Abscherung belastet. Die bei dem Blockieren des Klinkenrads 65 auftretenden Kräfte werden von dem als Abstützung dienenden Führungsstück 67 aufgenommen.

Um ein zuverlässiges Rückstellen der Sperrklinke 64 in die in Fig. 7 gezeigte Freigabeposition zu erreichen, wenn das Rad zum Stillstand kommt, ist in dem im Gehäusegrundteil 611 ausgebildeten Gehäuseboden ein magnetisch wirkendes Halteelement 68 vorgesehen, das in dem gezeigten Beispiel als Permanentmagnet realisiert ist. In der gezeigten Ausführungsform wird beispielsweise ein Magnetstück der Größe 3 x 2 x 1 mm aus vernickeltem NdFeB verwendet; die Sperrklinke besteht aus rostfreiem Stahl. Die übrigen Komponenten des Spannschlosses bestehen aus nicht-magnetischen Materialien wie hochfeste Kunststoffen, Aluminium oder unmagnetischem Stahl.

Das Halteelement befindet sich an einem Ort in dem Gehäuseboden, der in der Nähe des Endbereichs 642 der Sperrklinke 64 liegt, wenn diese sich in der Freigabestellung befindet; bei einer Auslenkung der Sperrklinke entfernt sich diese von dem Halteelement. Das Halteelement 68 wirkt magnetisch auf den Endbereich 642 und zieht diesen mit einer magnetischen Kraft an, sodass in der Freigabestellung die Sperrklinke mit einer magnetischen Kraft gehalten wird. Wenn jedoch das Rad, auf dem die Kette mit dem Spannschloss 60 montiert ist, sich dreht, wirkt auf die Sperrklinke 64 wie bereits erwähnt zusätzlich eine Fliehkraft, deren Größe mit dem Quadrat der Drehgeschwindigkeit (und somit dem Quadrat der Fahrgeschwindigkeit) zunimmt. Somit kann die Fliehkraft ab einer gewissen Geschwindigkeit die magnetische Kraft überwinden, sodass die Sperrklinke 24 in die in Fig. 6 gezeigte Blockierposition verschoben wird.

In der Blockierposition befindet sich die Sperrklinke soweit von dem Magneten 68 entfernt, dass aufgrund des begrenzten Wirkungsbereichs des Magnetfeldes die Magnetkraft vernachlässigbar gering ist. Dadurch ergibt sich eine zuverlässige Blockierung der Wickelrolle, ohne dass dem eine Rückstellkraft (z.B. einer Rückstellfeder bei herkömmlichen Modellen) entgegenwirkt. Wenn das Fahrzeug jedoch langsamer wird und schließlich zum Stillstand kommt, wird bei sehr langsamer Fahrt das Spannschloss zumindest vorübergehend eine Orientierung wie in Fig. 6 einnehmen, bei der die Sperrklinke sich oberhalb des magnetischen Halteelements 68 befindet. Die Sperrklinke 64 fällt dann unter Einwirkung der Schwerkraft nach unten, zu dem Halteelement hin, wodurch sie wieder in den Wirkungsbereich des Halteelements gerät und in der Freigabestellung der Fig. 7 gehalten wird. Auf diese Weise ergibt sich ein zuverlässiger Rückstellen der Sperrklinke in die Ruhestellung der Freigabeposition, die bei Stillstand des Rades dann in dieser Stellung gehalten wird.

Wie ferner aus Fig. 5 ersichtlich, ist die Sperrklinke plattenförmig ausgebildet und liegt mit ihren Flachseiten einerseits der der Wickelrolle 62, andererseits auf der Innenseite des Gehäusegrundteils, nämlich dem Gehäuseboden, auf. Zur Verbesserung der Beweglichkeit der Sperrklinke 64 kann der Gehäuseboden mit Rippen 69 ausgestaltet sein, die die effektive Auflagefläche verringern und so ein Gleiten der Sperrklinke 64 bei ihrer Bewegung entlang des Führungsstücks 67 fördern. Falls gewünscht, können die Rippen 69 so geformt sein, dass sie zusätzlich zum Führen der Bewegung der Sperrklinke 64 beitragen.

Selbstverständlich ist die gezeigte Erfindung nicht auf die gezeigten Ausführungsbeispiele beschränkt, sondern erfasst alle Ausführungsformen, die unter den unabhängigen Anspruch fallen. Insbesondere können auch die gezeigten Ausführungsbeispiele, wo immer zweckmäßig, miteinander kombiniert werden. Insbesondere kann eine Sperrklinke in einer Variante zur Ausführungsform der Fig. 5 auch mithilfe eines aus ihr ausgeprägten Bolzens als Achse geführt werden, oder umgekehrt die andere Ausführungsform mithilfe einer Führung anstelle einer Achse. Ebenso können die Positionen von Magnet und Gegenstück vertauscht sein.

## Patentansprüche

1. Spannschloss (20, 60) für ein auf ein Rad (3) eines Fahrzeuges montierbare Gleitschutzkette (1) mit einem Gehäuse (21, 61) und einem durch eine Gehäuseöffnung in das Gehäuse hineinziehbaren Spannstrang (7), wobei der Spannstrang innerhalb des Gehäuses (21, 61) an eine in Aufwickelrichtung vorgespannte, um ihre Achse (a1) drehbar gelagerte Wickelrolle (22, 62) angeschlossen ist, wobei an der Wickelrolle ein Klinkenrad (25, 65) vorgesehen ist, dem zumindest eine Sperrklinke (24, 64) zugeordnet ist, und der Spannstrang (7) durch Eingreifen der Sperrklinke (24, 64) in das Klinkenrad (25, 65) entgegen seiner Spannrichtung blockierbar ist,
wobei die Sperrklinke (24, 64) ausgehend von einer Freigabestellung, in welcher sie nicht in Eingriff mit dem Klinkenrad (25, 65) steht und der Spannstrang (7) nicht blockiert ist, bei Rotation des Rades (7) unter Einwirkung der Fliehkraft zumindest abschnittsweise nach außen bewegbar ist, wobei diese Bewegung ein Eingreifen der Sperrklinke (24, 64) in das Klinkenrad (25,65) bewirkt,
**gekennzeichnet durch**
ein magnetisches Halteelement (28, 68), welches mit der Sperrklinke über magnetische Wechselwirkung zusammenwirkt und zumindest in der Freigabestellung der Sperrklinke (24, 64) eine Rückstellkraft erzeugt, welche einer Auslenkung der Sperrklinke aus der Freigabestellung entgegenwirkt.

2. Spannschloss nach Anspruch 1, **dadurch gekennzeichnet, dass** das Halteelement (28, 68) mittels eines in dem Gehäuse angebrachten Permanentmagneten realisiert ist und die Sperrklinke (24, 64) zumindest teilweise magnetisierbares Material aufweist, welches sich bei der Auslenkung der Sperrklinke aus der Freigabestellung von dem Halteelement entfernt.

3. Spannschloss nach Anspruch 2, **dadurch gekennzeichnet, dass** die Sperrklinke (64) aus einem magnetisierbaren Material, insbesondere einem weich- oder hartmagnetischen Material, besteht.

4. Spannschloss nach einem der Ansprüche 1 bis 3, **dadurch gekennzeichnet, dass** die Sperrklinke (64) entlang einer in dem Gehäuse gehaltenen Führung (67) beweglich gelagert ist.

5. Spannschloss nach Anspruch 4, **dadurch gekennzeichnet, dass** die Führung (67) eine Bewegung der Sperrklinke (64) gemäß einer gekrümmten Bahn zulässt, an deren einem Ende die Sperrklinke (64) mittels zumindest einem Fortsatz (646) in das Klinkenrad (65) eingreift.

6. Spannschloss nach einem der Ansprüche 1 bis 3, **dadurch gekennzeichnet, dass** die Sperrklinke (24) exzentrisch um eine Achse (a2) drehbar gelagert ist.

7. Spannschloss nach einem der vorhergehenden Ansprüche, **dadurch gekennzeichnet, dass** die Sperrklinke (64) zumindest teilweise innerhalb des Klinkenrads (65) angeordnet ist und das Klinkenrad (65) an einer inneren Umfangsfläche eine Verzahnung (56) aufweist, mit welcher die Sperrklinke (64) durch eine von der Fliehkraft bewirkte Auslenkung (i.S.d. Verschiebung und/oder Verdrehung) der Sperrklinke in Eingriff bringbar ist.

8. Spannschloss nach einem der Ansprüche 1 bis 6, **dadurch gekennzeichnet, dass** das Klinkenrad (25) an einer äußeren Umfangsfläche eine Verzahnung (26) aufweist, mit der das Klinkenrad in der Blockierstellung zusammenwirkt.

9. Spannschloss nach einem der vorhergehenden Ansprüche, **dadurch gekennzeichnet, dass** die Sperrklinke (64) plattenförmig ausgebildet ist und zumindest einen mit dem Klinkenrad (65) in Eingriff bringbaren Fortsatz (646) aufweist.

10. Spannschloss einem der vorhergehenden Ansprüche, **dadurch gekennzeichnet, dass** die Wickelrolle (22) und das Klinkenrad (25) einstückig miteinander ausgebildet sind.

## Claims

1. A tensioning lock (20, 60) for an anti-skid chain to be mounted on a wheel (3) of a vehicle, comprising a housing (21, 61) and a tensioning strand (7) that can be pulled into the housing through an opening in the housing, wherein the tensioning strand is connected within the housing (21, 61) to a winding roll (22, 62) pretensioned in the winding direction and is mounted to be rotatable about its axis (a1), wherein the winding roll is provided with a ratchet wheel (25, 65) with which at least one ratchet pawl (24, 64) is associated, and the tensioning strand (7) is blockable by engagement of the ratchet pawl (24, 64) in the ratchet wheel (25, 65) against its direction of tension,
wherein the ratchet pawl (24, 64) or at least a section thereof is movable outwardly from a release position in which it is not in engagement with the ratchet wheel (25, 65) and the tensioning strand (7) is not blocked, by virtue of centrifugal force under rotation of the wheel (7), with such movement effecting an engagement of the ratchet pawl (24, 64) in the ratchet wheel (25, 65),
**characterized by**
a magnetic holding element (28, 68) which cooperates with the ratchet pawl via magnetic interaction and generates, at least in the release position of the ratchet pawl (24, 64), a return force which counteracts a deflection of the ratchet pawl from the release position.

2. Tensioning lock according to claim 1, **characterized in that** the holding element (28, 68) is realized by a permanent magnet attached in the housing and the ratchet pawl (24, 64) comprises at least partly magnetizable material which moves away from the holding element during deflection of the ratchet pawl from the release position.

3. Tensioning lock according to claim 2, **characterized in that** the ratchet pawl (64) is made of a magnetizable material, in particular a soft-magnetic or hard-magnetic material.

4. Tensioning lock according to one of the claims 1 to 3, **characterized in that** the ratchet pawl (64) is mounted movable along a guide (67) which is held in the housing.

5. Tensioning lock according to claim 4, **characterized in that** the guide (67) permits a movement of the ratchet pawl (64) along a curved path, at one end of which the ratchet pawl (64) engages in the ratchet wheel (65) by means of at least one projection (646).

6. Tensioning lock according to one of the claims 1 to 3, **characterized in that** the ratchet pawl (24) is mounted eccentrically rotatable about an axis (a2).

7. Tensioning lock according to one of the preceding claims, **characterized in that** the ratchet pawl (64) is arranged at least partly within the ratchet wheel (65) and the ratchet wheel (65) has a gearing (56) on an inner circumferential surface, with which the ratchet pawl (64) is engageable by a deflection (within the terms of displacement and/or twisting) of the ratchet pawl as effected by centrifugal force.

8. Tensioning lock according to one of the claims 1 to 6, **characterized in that** the ratchet wheel (25) comprises a gearing (26) on an outer circumferential surface, with which the ratchet wheel cooperates in the blocking position.

9. Tensioning lock according to one of the preceding claims, **characterized in that** the ratchet pawl (64) is plate-shaped and comprises at least one projection (646) for engagement with the ratchet wheel (65).

10. Tensioning lock according to one of the preceding claims, **characterized in that** the winding roll (22) and the ratchet wheel (25) are integral with each other.

## Revendications

1. Tendeur (20, 60) pour une chaîne antidérapante (1) à monter sur une roue (3) d'un véhicule, comportant un carter (21, 61) et un câble de serrage (7) insérable dans le carter par une ouverture de carter, ledit câble de serrage étant raccordé à l'intérieur du carter (21, 61) à un galet d'enroulement (22, 62) précontraint en direction d'enroulement et monté de manière à être rotatif autour de son axe (a1), une roue à cliquet (25, 65) étant prévue contre le galet d'enroulement, à laquelle correspond au moins un cliquet de verrouillage (24, 64), et le câble de serrage (7) pouvant être bloqué dans la roue à cliquet (25, 65) contre sa direction de tension par engrènement du cliquet de verrouillage (24, 64),
ledit cliquet de verrouillage (24, 64) étant déplaçable au moins partiellement vers l'extérieur à partir d'une position de déblocage où il ne se trouve pas en prise avec la roue à cliquet (25, 65) et où le câble de serrage (7) n'est pas bloqué, sous l'effet de la force centrifuge en cas de rotation de la roue (7), ce déplacement entraînant un engrènement du cliquet de verrouillage (24, 64) avec la roue à cliquet (25, 65),
**caractérisé par**
un élément de retenue magnétique (28, 68) qui coopère avec le cliquet de verrouillage par interaction magnétique, et génère une force de rappel au moins en position de déblocage du cliquet de verrouillage (24, 64), laquelle s'oppose à un déplacement du cliquet de verrouillage hors de la position de déblocage.

2. Tendeur selon la revendication 1, **caractérisé en ce que** l'élément de retenue (28, 68) est réalisé au moyen d'un aimant permanent monté dans le carter, et **en ce que** le cliquet de verrouillage (24, 64) comporte un matériau au moins partiellement magnétisable, qui s'éloigne de l'élément de retenue en cas de déplacement du cliquet de verrouillage hors de la position de déblocage.

3. Tendeur selon la revendication 2, **caractérisé en ce que** le cliquet de verrouillage (64) se compose d'un matériau magnétisable, en particulier d'un matériau magnétique doux ou dur.

4. Tendeur selon l'une des revendications 1 à 3, **caractérisé en ce que** le cliquet de verrouillage (64) est monté de manière à être mobile le long d'un guidage (67) maintenu dans le carter.

5. Tendeur selon la revendication 4, **caractérisé en ce que** le guidage (67) permet un déplacement du cliquet de verrouillage (64) sur un trajet courbe, à la première extrémité duquel le cliquet de verrouillage (64) s'engrène avec la roue à cliquet (65) par au moins une saillie (646).

6. Tendeur selon l'une des revendications 1 à 3, **caractérisé en ce que** le cliquet de verrouillage (24) est monté excentriquement de manière à être rotatif autour d'un axe (a2).

7. Tendeur selon l'une des revendications précédentes, **caractérisé en ce que** le cliquet de verrouillage (64) est au moins partiellement disposé à l'intérieur de la roue à cliquet (65), et **en ce que** la roue à cliquet (65) comporte une denture (56) sur une surface périphérique intérieure, avec laquelle le cliquet de verrouillage (64) peut être engrené par un déplacement (au sens d'une translation et/ou d'une rotation) du cliquet de verrouillage provoqué par la force centrifuge.

8. Tendeur selon l'une des revendications 1 à 6, **caractérisé en ce que** la roue à cliquet (25) comporte une denture (26) sur une surface périphérique extérieure, avec laquelle la roue à cliquet coopère en position de blocage.

9. Tendeur selon l'une des revendications précédentes, **caractérisé en ce que** le cliquet de verrouillage (64) est réalisé en forme de plaque, et **en ce qu'**il comporte au moins une saillie (646) pouvant s'engrener avec la roue à cliquet (65).

10. Tendeur selon l'une des revendications précédentes, **caractérisé en ce que** le galet d'enroulement (22) et la roue à cliquet (25) sont réalisés en une seule pièce.
